# EUROPEAN PATENT APPLICATION

(11) **EP 2 479 997 A1**
(43) Date of publication of application: **25.07.2012**
(21) Application number: 11305052.0
(22) Date of filing: 19.01.2011
(51) Int. Cl.: H04N 7/36, H04N 7/34, H04N 7/26

(54) **Method and apparatus for encoding or decoding a video signal using a summary reference picture**

(71) Applicant: Thomson Licensing, 92130 Issy-les-Moulineaux (FR)
(72) Inventor: Thoreau, Dominique, 35510, CESSON SEVIGNE (FR); Cherigui, Safa, 35000, Rennes (FR)
(74) Representative: Hartnack, Wolfgang

(57) **Abstract**

In interframe video encoding temporal prediction is carried out that is based on motion compensation using a motion vector prediction from a reference frame. But in low bit rate coding, temporal prediction of blocks having texture content achieves only a low Rate-Distortion performance. According to the invention, for blocks having texture content a prediction from a reduced-size texture summary reference picture SRP (i.e. a position referencing) is carried out instead, wherein the components of the prediction vector are derived from the components of vectors for reconstructed blocks adjacent to the current block, and wherein the components of the current block vector refer to the position of the content of the current block within the SRP. The encoded data (SRPI) of the SRP and of the components of the block vectors are transmitted and evaluated at decoder side.

## Description

The invention relates to a method and to an apparatus for encoding or decoding a video signal using for texture content encoding a summary reference picture representing epitomised content of a texture content picture.

### Background

In interframe or interfield picture sequence encoding a temporal prediction is carried out that is based on motion compensation using a motion vector prediction, wherein that motion vector prediction is controlled by a motion estimation program or rule. For coding the motion vector dedicated to the prediction, the vector predictor can be determined from the spatial or temporal causal (already decoded part of the) neighbourhood of the current block or macroblock. Based on that vector predictor, the vector prediction is differentially encoded.

In the ITU-T Rec. H.264/ISO/IEC 14496-10 AVC video coding standard, for interframe encoding and decoding the motion vector predictor for a current block or macroblock is derived from a function of the motion vectors of neighbouring reconstructed blocks. That function can be a median operator applied separately to the components of the vectors of a given group of previously reconstructed blocks, cf. and H.264 (03/2005), sections 8.4.1, 8.4.1.1, 8.4.1.3.1 8.4.1.3.2., and EP 0707428 A1.

Such temporal vector prediction using spatially neighbouring vectors is based on the assumption that the motion field is locally homogeneous. Then it is reasonable to estimate (as a first approximation) the components (dx, dy) of the current vector for a current block as being equal to the vector components of one of the neighbouring blocks.

One goal in video coding, e.g. in H.264 video coding, is to provide an equal coding/decoding quality for all sections within the pictures of a video sequence, also in low bit rate coding. In such coding it will frequently happen that blocks or macroblocks having texture content (denoted "texture block" in the following) are predicted temporally.

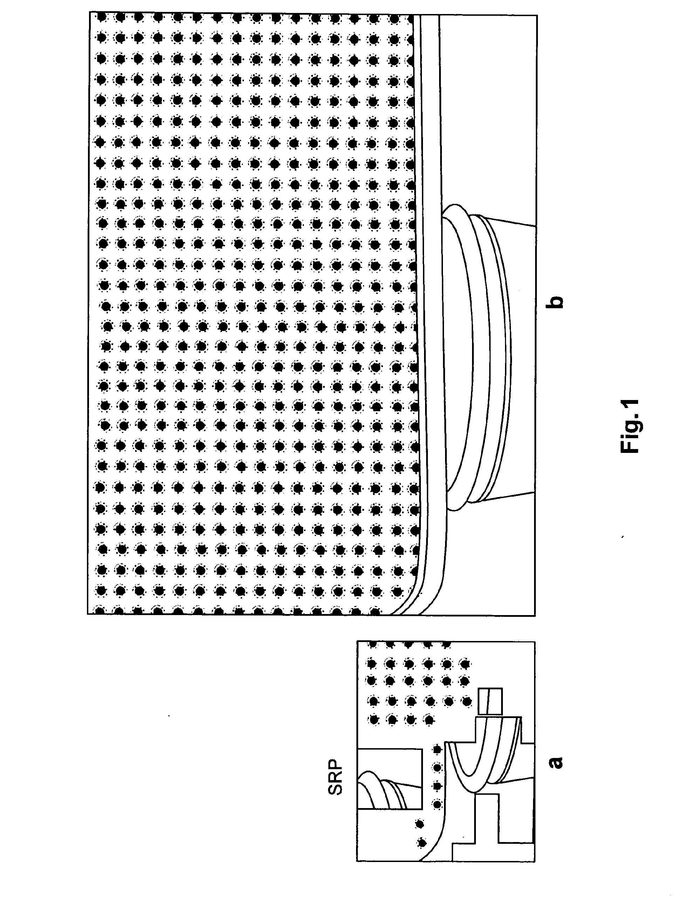

E.g. from V. Cheung, B.J. Frey, N. Jojic, "Video Epitomes", International Journal of Computer Vision, Vol.76, No.2, Feb.2008, it is known to use for texture-content frames (cf. the example in Fig. 1b) as reference picture a reduced-size 'texture summary picture' (cf. the example in Fig. 1a).

### Invention

A problem occurs in texture block prediction of a current frame in cases where the reference picture represents such a 'summary' of the texture contained in the current frame. Encoding such texture block frame content with a classical temporal prediction processing as used for example in the AVC/H.264 standard is not optimal in terms of rate/distortion.

A problem to be solved by the invention is to improve the video coding performance by keeping an equal coding/decoding quality for low bit rates also in case the block or macroblock prediction is based on a texture summary reference picture. This problem is solved by the methods disclosed in claims 1 and 3. Apparatuses that utilise these methods are disclosed in claims 2 and 4.

The invention is related to block or macroblock prediction and more specifically to vector assignation prediction and the vector assignation predictor for the prediction from a reduced-size texture summary reference picture to a current block in a current frame. Instead of motion vector prediction between the current frame and a reference frame of the same size, in the invention the prediction is not based on a motion vector but on the prediction position within the summary reference picture. I.e., it is based on the 'vector position' in the summary reference picture.

This texture summary reference picture based prediction is used at encoder and decoder sides and facilitates a coding gain.

Compared to existing coding methods based on a motion field that is a priori homogeneous, the invention has the advantage of improving the Rate-Distortion performance.

In principle, the inventive encoding method is suited for encoding a video signal, each picture of which contains multiple blocks or macroblocks wherein, for determining a prediction motion vector for a current block or macroblock, the components of motion vectors of adjacent reconstructed blocks or macroblocks are used to calculate the components of said prediction motion vector, and wherein the component differences between said prediction motion vector and a motion vector for said current block or macroblock are formed for the predictive encoding of said video signal, and are suitable for a corresponding video signal decoding, said method including the steps:
- establishing a summary reference picture representing epitomised content of texture content of related sections of said video signal, the size of which summary reference picture is smaller than the size of said video signal picture;
- for a current block or macroblock containing texture content, calculating the components of a prediction vector which are derived from the components of vectors for adjacent reconstructed blocks or macroblocks, wherein the component differences between said prediction vector and a vector for said current block or macroblock are formed for the predictive encoding of said current block or macroblock, and are suitable for a corresponding decoding of said current block or macroblock, and wherein the components of said vector for said current block or macroblock refer to the position of the content of said current block or macroblock within said summary reference picture;
- providing encoded data of said summary reference picture and of the components of the vectors referencing to the positions of the content of corresponding blocks or macroblocks within said summary reference picture.

In principle the inventive encoding apparatus is suited for encoding a video signal, each picture of which contains multiple blocks or macroblocks wherein, for determining a prediction motion vector for a current block or macroblock, the components of motion vectors of adjacent reconstructed blocks or macroblocks are used to calculate the components of said prediction motion vector, and wherein the component differences between said prediction motion vector and a motion vector for said current block or macroblock are formed for the predictive encoding of said video signal, and are suitable for a corresponding video signal decoding, said apparatus including:
- means being adapted for establishing a summary reference picture representing epitomised content of texture content of related sections of said video signal, the size of which summary reference picture is smaller than the size of said video signal picture;
- for a current block or macroblock containing texture content, means being adapted for calculating the components of a prediction vector which are derived from the components of vectors for adjacent reconstructed blocks or macroblocks, and for forming the component differences between said prediction vector and a vector for said current block or macroblock for the predictive encoding of said current block or macroblock, which component differences are suitable for a corresponding decoding of said current block or macroblock, and wherein the components of said vector for said current block or macroblock refer to the position of the content of said current block or macroblock within said summary reference picture;
- means being adapted for providing encoded data of said summary reference picture and of the components of the vectors referencing to the positions of the content of corresponding blocks or macroblocks within said summary reference picture.

In principle, the inventive decoding method is suited for decoding a video signal encoded according to the above encoding method, said decoding method including the steps:
- receiving and decoding said summary reference picture data and said components of the vectors referencing to the positions of the content of corresponding blocks or macroblocks within said summary reference picture;
- reconstructing from said decoded summary reference picture data a texture reference picture;
- in the video signal decoding, using said texture reference picture for decoding blocks or macroblocks having texture content, so as to provide said decoded video signal.

In principle, the inventive decoding apparatus is suited for decoding a video signal encoded according to the above encoding method, said apparatus including:
- means being adapted for receiving and decoding said summary reference picture data and said components of the vectors referencing to the positions of the content of corresponding blocks or macroblocks within said summary reference picture;
- means being adapted for reconstructing from said decoded summary reference picture data a texture reference picture;
- means being adapted for, in the video signal decoding, using said texture reference picture for decoding blocks or macroblocks having texture content, so as to provide said decoded video signal.

Advantageous additional embodiments of the invention are disclosed in the respective dependent claims.

### Drawings

Exemplary embodiments of the invention are described with reference to the accompanying drawings, which show in:
- Fig. 1: an example texture summary reference picture in part (a) that is dedicated to the picture in part (b);
- Fig. 2: principle of current block prediction from a summary reference picture;
- Fig. 3: Fig. 2 prediction processing in more detail;
- Fig. 4: simplified block diagram of an inventive encoder;
- Fig. 5: simplified block diagram of an inventive decoder.

### Exemplary embodiments

In case the reference frame or field is a 'texture summary picture' as shown in Fig. 1a, the H.264/AVC vector predictor determination for a picture as shown in Fig. 1b does not fit to the structure and principle of such texture summary picture. For instance, if a current picture is composed of the same type of texture, all blocks of the current frame will contain the same texture but with different spatial phases. A corresponding texture summary reference picture SRP is composed of a set of texture elements such that the different spatial phases of the texture are saved in the texture reference picture. An advantage is that the SRP size is smaller than the current picture size and therefore requires lower storage and transmission capacity. In case the texture has periodicity and all blocks/macroblocks of the current picture have the same pattern of texture, the SRP will have a size of a single block or macroblock only.

For ease of understanding, the following hypothetical example is considered:
- All blocks of the current frame will find their prediction (block of pixels) in the same location in the SRP,
- but the blocks of the current frame are associated with different vectors due to the different block positions in the current frame.
- This means that the resulting spatial vector prediction is not optimum because neighbouring vectors are different although they are based on the same texture block prediction.

According to the invention, vector assignation or position for the prediction from the SRP to a current block P_{cur} in a current frame is considered, instead of a classical motion vector from the current frame to a full-size full-content reference frame. In the context of an SRP in which the texture is reduced to a pattern texture element, when viewing from the current frame, it can be supposed for a current block in that frame that the texture is nearly homogeneous and, as a consequence,
a) the vectors assignation field for the prediction from the SRP to the current blocks is nearly homogeneous, so that rather the position of the prediction block in the SRP is considered.
b) Then the predictor of the current vector assignation will be a function of the neighbouring decoded vectors assignation (or positions) .

According to the invention, the corresponding computation is realised symmetrically at encoder and decoder sides, using the decoded assignation vectors (or position) of the current picture blocks.

### Vector assignation

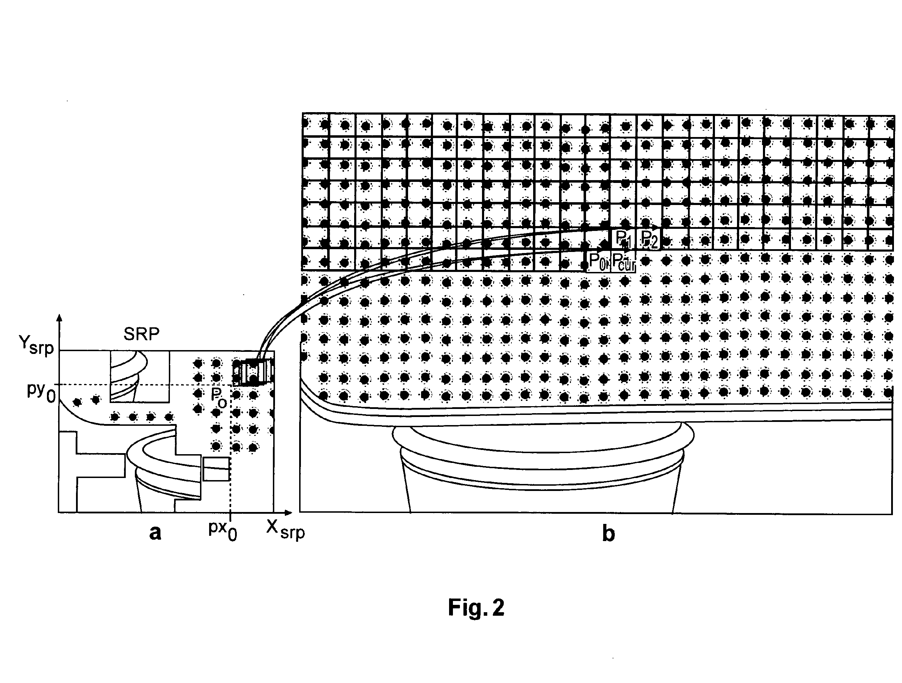

The inventive processing works similarly in the video encoder and in the video decoder and is illustrated in Fig. 2. B_{cur} is a current block or macroblock in the current picture shown in Fig. 2b for which a block or macroblock prediction issuing from the SRP shown in Fig. 2a via the vector assignation P_{cur} is desired. The neighbouring decoded blocks with their respective vector assignations are:
- Left block: block B₀ with vector P₀ having components py₀ and px₀, wherein px₀ and py₀ determine the position of block b₀ on the axes Xₛᵣₚ and Y_{srp'} respectively, in the SRP.
- Top block: block B₁ with vector P₁ having components py₁ and px₁,
- Top-left block: block B₂ with vector P₂ having components py₂ and px₂.

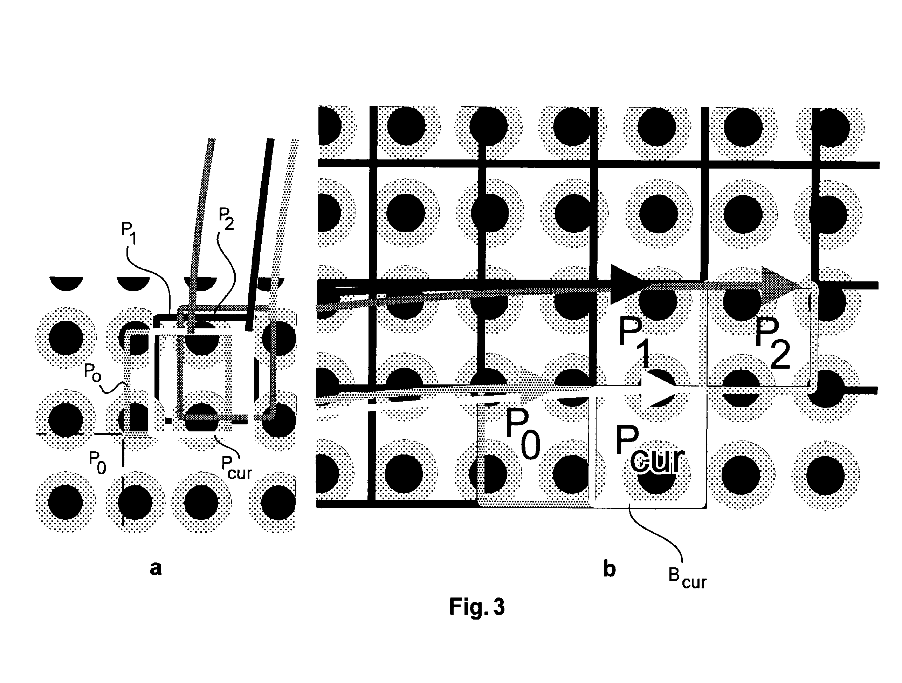

The location of these blocks labelled with their corresponding prediction vector end points in the current picture and the location of the vector starting points in the SRP are depicted in more detail in Fig. 3b and 3a, respectively. Although the prediction is required for different block positions in the block grid of the current picture, the reference picture content or location of P₁, P₂ and P_{cur} represents only a block-fraction shift to the right and/or to the above in picture SRP.

### Prediction of assigned vectors

As explained above, the vector assignation corresponds to the coordinates of the pixel prediction block or macroblock in reference to the SRP picture. The advantage of the SRP-based processing resides in the concentration of the texture, whereby for a homogeneous texture region of the current frame the prediction is extracted from the same texture element of the SRP.

In the inventive image and video compression, for each block to be encoded the vector assignment corresponding to the position of the content of said current block or macroblock within the SRP is sent to the decoder side. Advantageously, not the components px_{cur} and py_{cur} of current vector P_{cur} are transmitted but the difference values between these components and the components of a prediction vector. The components px_{cur} and py_{cur}, or the corresponding difference values, can be transmitted with fixed-length code FLC or preferably with variable-length code VLC. Such prediction vector can be determined like a function of the neighbouring vector assignation: P₀, P₁ and P₂ of Fig. 2 and Fig. 3.

An example embodiment is based on the three previously decoded blocks B₀, B₁ and B₂ (their positions corresponding to the block positions P₀, P₁ and P₂, respectively, in Fig. 3b) and the median operator used to determine the values pxp_{red} = median(px₀, Px₁, px₂) and py_{pred} = median (py₀, py₁, py₂) for the position of prediction vector P_{pred} = (px_{pred}, py_{pred}). Thereafter the vector error residual Pₑᵣₛ = P_{cur} - P_{pred} is encoded and sent to the decoder, with pxₑᵣₛ = Px_{cur} - Px_{pred} and pyₑᵣₛ = py_{cur} - py_{pred}.

At decoder side, the components of P_{cur} = Pₑᵣₛ + P_{pred} are reconstructed correspondingly from the pxₑᵣₛ and Pyₑᵣₛ values and the above median calculations, i.e. P_{cur} = (px_{cur}, py_{cur}) = (pxₑᵣₛ + median(px₀, px₁, px₂), pyₑᵣₛ + median(py₀, py₁, py₂).

In a different embodiment, the number of neighbouring blocks used to form prediction vector Pp_{red} can be smaller than or greater than three.

Instead of 'median', the function for determining the components of the prediction vector from the available decoded components can be 'average' or any other suitable operator.

As mentioned above, in the encoding processing the invention uses the vector position within the SRP (and the associated predictor with a vector position predictor rule). I.e., such vector does not represent the real motion of the block with texture content but merely matches the block's texture content with any suitable texture content in the SRP. Advantageously, this principle can be substituted in a classical coder (e.g. in a H.264 coder) in cases where the block of prediction comes from a summary reference picture SRP.

When not first-pass checking or pre-encoding a complete video sequence, it is also possible to use more than one SRP picture. In addition to the vector error residual component values (pxₑᵣₛ, pyₑᵣₛ), the SRP picture or pictures are transmitted to the video decoder side.

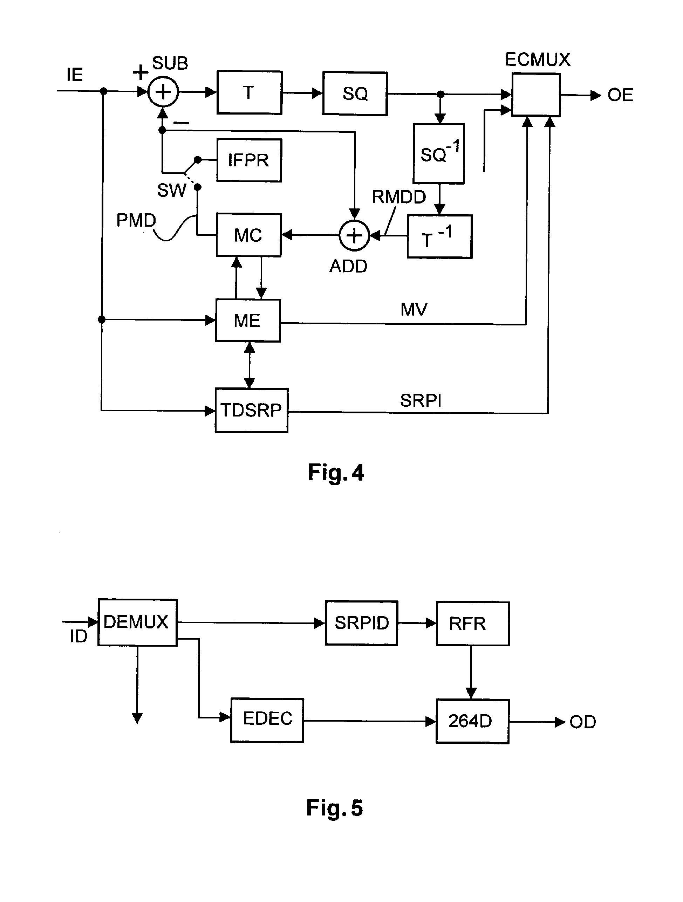

In Fig. 4, which includes e.g. the functionality of an H.264/AVC encoder, the video data input signal IE of the encoder contains e.g. 16*16 macroblock data including luminance and chrominance pixel blocks for encoding. In case of video data to be intraframe or intrafield coded (I mode) they pass a subtractor SUB unmodified. Thereafter the e.g. 8*8 pixel blocks of the 16*16 macroblocks are processed in a transform step or stage T and in a scaling/quantising step or stage SQ, and are fed to an entropy coder and multiplexer ECMUX which outputs the encoder video data output signal OE. In the ECMUX, header information, motion vector data MV and texture summary reference picture information SRPI are combined with the encoded video data.

Intraframe prediction for the video data input signal IE can be used in a corresponding intraframe prediction step or stage IFPR, and switch SW is connected correspondingly.

In case of video data to be interframe or interfield coded (P or B like modes), predicted block or macroblock data PMD are subtracted on a block basis from the input signal IE in subtractor SUB, and block difference data are fed via transform step/stage T and scaling/quantising step/stage SQ to ECMUX. The output signal of SQ is also processed in a corresponding inverse scaling/quantising step or stage SQ⁻¹, the output signal of which is fed via a corresponding inverse transform step or stage T⁻¹ to the combiner ADD in the form of reconstructed block or macroblock difference data RMDD. The output signal of ADD is buffer-stored in a picture store in a motion compensation step or stage MC, which carries out motion compensation for reconstructed block or macroblock data and output correspondingly predicted block or macroblock data PMD to the subtracting input of SUB and to the other input of the combiner ADD. The characteristics of the scaling/quantising step/stage SQ and the inverse scaling/ quantising step/stage SQ⁻¹ are controlled e.g. by the occupancy level of an encoder buffer in ECMUX. A motion estimator step or stage ME receives the input signal IE and provides motion compensation step/stage MC with the required motion information and provides step/stage ECMUX with motion vector data MV for transmission to, and evaluation in, a corresponding decoder.

The video data input signal IE is also fed to a texture detector and summary reference picture processing step or stage TDSRP. In TDSRP, texture sections in the current frame or field are determined and a corresponding summary reference picture is generated as described above. At least for picture sections containing texture of similar type, the corresponding blocks or macroblocks are predicted (i.e. based on the prediction position within the SRP) and coded based on the current content of the summary reference picture, using as described above the px_{cur} and py_{cur} components for vector P_{cur} and e.g. the median operator for predicting the P_{pred} vector components. These values and the summary reference picture data belong to the texture summary reference picture information SRPI transmitted or transferred to the video decoder side.

In Fig. 5 the encoded video data input signal ID is fed via a demultiplexer DEMUX that provides encoded video data and motion information data to an entropy decoder step/stage EDEC and SRPI information data to a texture summary reference picture information decoding step or stage SRPID. From the decoded SRPI information data, a current texture reference picture is reconstructed in a corresponding inverse processing in a reference frame reconstruction step or stage RFR, and is used in a H.264/AVC-like decoder 264D for decoding the corresponding picture sections for output of the decoded video output signal OD.

The invention can be used for instance in a low bit-rate video codec for high-resolution video (e.g. HD for mobile devices), and for super-resolution video applications (more than HD.

## Claims

1. Method for encoding a video signal (IE), each picture of which contains multiple blocks or macroblocks wherein, for determining a prediction motion vector for a current block or macroblock (B_{cur}), the components of motion vectors of adjacent reconstructed blocks or macroblocks are used to calculate the components of said prediction motion vector, and wherein the component differences between said prediction motion vector and a motion vector for said current block or macroblock are formed for the predictive encoding of said video signal, and are suitable for a corresponding video signal decoding, **characterised by** the steps:
- establishing (TDSRP) a summary reference picture (SRP) representing epitomised content of texture content of related sections of said video signal, the size of which summary reference picture is smaller than the size of said video signal picture;
- for a current block or macroblock (B_{cur}) containing texture content, calculating the components of a prediction vector (Pp_{red}) which are derived from the components (px₀, px₁, px₂, py₀, py₁, py₂) of vectors (P0, P1, P2) for adjacent reconstructed blocks or macroblocks, wherein the component differences (pxₑᵣₛ, pyₑᵣₛ) between said prediction vector and a vector (P_{cur}) for said current block or macroblock are formed for the predictive encoding of said current block or macroblock, and are suitable for a corresponding decoding of said current block or macroblock, and wherein the components of said vector (P_{cur}) for said current block or macroblock refer to the position (px_{cur} py_{cur}) of the content of said current block or macroblock within said summary reference picture (SRP);
- providing (OD) encoded data (SRPI) of said summary reference picture (SRP) and of the components (px_{cur}, py_{cur}) of the vectors referencing to the positions of the content of corresponding blocks or macroblocks within said summary reference picture.

2. Apparatus for encoding a video signal (IE), each picture of which contains multiple blocks or macroblocks wherein, for determining a prediction motion vector for a current block or macroblock (B_{cur}), the components of motion vectors of adjacent reconstructed blocks or macroblocks are used to calculate the components of said prediction motion vector, and wherein the component differences between said prediction motion vector and a motion vector for said current block or macroblock are formed for the predictive encoding of said video signal, and are suitable for a corresponding video signal decoding, said apparatus including:
- means (TDSRP) being adapted for establishing a summary reference picture (SRP) representing epitomised content of texture content of related sections of said video signal, the size of which summary reference picture is smaller than the size of said video signal picture;
- for a current block or macroblock (B_{cur}) containing texture content, means being adapted for calculating the components of a prediction vector (Pp_{red}) which are derived from the components (px₀, px₁, px₂, py₀, py₁, py₂) of vectors (P0, P1, P2) for adjacent reconstructed blocks or macroblocks, and for forming the component differences (pxₑᵣₛ, pyₑᵣₛ) between said prediction vector and a vector (P_{cur}) for said current block or macroblock for the predictive encoding of said current block or macroblock, which component differences are suitable for a corresponding decoding of said current block or macroblock, and wherein the components of said vector (P_{cur}) for said current block or macroblock refer to the position (px_{cur'} py_{cur}) of the content of said current block or macroblock within said summary reference picture (SRP);
- means (ECMUX) being adapted for providing encoded data (SRPI) of said summary reference picture (SRP) and of the components (px_{cur}, py_{cur}) of the vectors referencing to the positions of the content of corresponding blocks or macroblocks within said summary reference picture.

3. Method for decoding a video signal (ID) encoded according to the method of claim 1, **characterised by** the steps:
- receiving (DEMUX) and decoding (SRPID) said summary reference picture data (SRPI) and said components (px_{cur}, py_{cur}) of the vectors referencing to the positions of the content of corresponding blocks or macroblocks within said summary reference picture;
- reconstructing (RFR) from said decoded summary reference picture data (SRPI) a texture reference picture;
- in the video signal decoding (EDEC, 264D), using said texture reference picture for decoding blocks or macroblocks having texture content, so as to provide said decoded video signal (OD).

4. Apparatus for decoding a video signal (ID) encoded according to the method of claim 1, said apparatus including:
- means(DEMUX, SRPID) being adapted for receiving and decoding said summary reference picture data (SRPI) and said components (px_{cur}, py_{cur}) of the vectors referencing to the positions of the content of corresponding blocks or macroblocks within said summary reference picture;
- means (RFR) being adapted for reconstructing from said decoded summary reference picture data (SRPI) a texture reference picture;
- means (EDEC, 264D) being adapted for, in the video signal decoding, using said texture reference picture for decoding blocks or macroblocks having texture content, so as to provide said decoded video signal (OD).

5. Method according to claim 1 or 3, or apparatus according to claim 2 or 4, wherein said adjacent reconstructed blocks or macroblocks are the left (B₀), top (B₁) and top-left (B₂) blocks or macroblocks of said current block or macroblock (B_{cur}).

6. Method according to claim 5, or apparatus according to claim 5, wherein the components (pxp_{red}, py_{pred}) of said prediction vector (P_{pred}) are calculated using a median function for the x-components (px₀, px₁, px₂) and a median function for the y-components (py₀, py₁, py₂) of the vectors (P0, P1, P2) for said adjacent reconstructed blocks or macroblocks.

7. Method according to claim 5, or apparatus according to claim 5, wherein the components (px_{pred}, py_{pred}) of said prediction vector (P_{pred}) are calculated using the average of the x-components (px₀, px₁, px₂) and the average of the y-components (py₀, py₁, py₂) of the vectors (P0, P1, P2) for said adjacent reconstructed blocks or macroblocks.

8. Method according to one of claims 1, 3 and 5 to 7, or apparatus according to one of claims 2 and 4 to 7, wherein the difference values (pxₑᵣₛ, pyₑᵣₛ) between the components (px_{pred}, pyp_{red}) of said prediction vector and the components (px_{cur}, py_{cur}) of said vector for the current block or macroblock are transmitted or received, respectively, coded with fixed-length code FLC or variable-length code VLC.

9. Method according to one of claims 1, 3 and 5 to 8, or apparatus according to one of claims 2 and 4 to 8, wherein more than one summary reference picture (SRP) is used per video sequence.

10. Digital video signal that is encoded according to the method of one of claims 1, 3 and 5 to 9.

11. Storage medium that contains or stores, or has recorded on it, the digital video signal according to claim 10.
